# EUROPEAN PATENT APPLICATION

(11) **EP 4 718 648 A1**
(43) Date of publication of application: **01.04.2026**
(21) Application number: 25203647.0
(22) Date of filing: 22.09.2025
(51) Int. Cl.: H02B 1/056, H02B 1/20, H02G 5/02

(54) **AN INSULATOR FOR A CIRCUIT BREAKER**

(30) Priority: 28.09.2024 IN 202421073476
(71) Applicant: Vertiv Corporation, Westerville, OH 43082 (US)
(72) Inventor: BHILARE, PRASHANT, Westerville, 43082 (US); SHAH, AKSHAY, Westerville, 43082 (US); SANGAONKAR, YOGESH, Westerville, 43082 (US)
(74) Representative: Cousens, Nico

(57) **Abstract**

An insulator for a circuit breaker is disclosed. The insulator comprises a base, an intermediate block, and a top block arranged in a stepped configuration. The base includes a pair of first holes for receiving first fasteners, and a pair of pins extending vertically to engage a first busbar and a second busbar, thereby preventing misalignment. The intermediate block includes second holes for receiving second fasteners and tabs extending laterally to prevent angular displacement of the busbars. The top block comprises third holes to secure a third busbar via third fasteners. The pins extend beyond the insulator's height to guide proper alignment. The insulator enables front access installation and maintenance of the circuit breaker.

## Description

### FIELD

The present invention generally relates to field of electrical systems. More specifically, the present invention is related to an insulator for a circuit breaker.

### BACKGROUND

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also correspond to implementations of the claimed technology.

Electric systems such as solar add-on, expansion unit, and any power system which uses a hot swappable front access breaker includes a plug-in type Molded Case Circuit Breaker (MCCB) for providing the unit from overload protection and short-circuit protection. It is necessary that the circuit breaker is properly engaged with the busbars for optimal system operation.

While installing the circuit breaker, it is necessary that the circuit breaker can be easily plugged in to ensure seamless installation. However, in the existing system, the connectors of the circuit breaker are accessed from their rear end which ends up in incorrect installation of the busbars. As a result, the busbars tend to be displaced from their intended place (angular displacement/rotational movement in due course of time) thereby causing the circuit to trip and affect the entire unit. Likewise, in the event of a failure or damage to the circuit breaker, it becomes necessary to replace the busbars to maintain proper engagement which again is cumbersome due to the rear access. As a result, the electric connection of the entire system needs to be unplugged not only for installation purposes but also during maintenance.

In modern electrical infrastructures, particularly those designed for modularity and ease of maintenance such as solar PV systems, industrial DC distribution panels, and expandable data center power modules plug-in type MCCBs are increasingly favored due to their ease of replacement and front-access characteristics. However, existing configurations still rely heavily on rear-access wiring or bolted busbar terminals, which are prone to installation errors, increased downtime, and maintenance hazards.

Rear-access configurations often require disassembling multiple components or shutting down power systems entirely, even for simple replacements. Such delays are not only operationally inefficient but also introduce safety risks due to potential misalignment or arcing during reconnection. Moreover, without a guided mechanical alignment mechanism, conventional systems risk angular displacement, thermal hotspots due to poor contact pressure, or loosening over time caused by vibration or thermal cycling. This makes the system vulnerable to nuisance tripping, contact failure, or catastrophic faults.

Thus, there is a need for an insulator for a circuit breaker to overcome the above-mentioned challenges.

### OBJECTS OF THE DISCLOSURE

Some of the objects of the present disclosure, which at least one embodiment herein satisfies, are as follows:

An object of the present disclosure is to provide an insulator for the circuit breaker.

Another object of the present disclosure is to provide an insulator which allows installation and assembly of a circuit breaker in relatively less time.

Yet another object of the present disclosure is to provide an insulator which when secured to a circuit breaker enhances serviceability of the circuit breaker.

Still another object of the present disclosure is to provide an insulator which when attached to a circuit breaker reduces the servicing time of the circuit breaker.

### SUMMARY

This summary is provided to introduce aspects related to the present disclosure of an insulator for a circuit breaker and the aspects are further described below in the detailed description. This summary is not intended to identify essential features of the claimed subject matter nor is it intended for use in determining or limiting the scope of the claimed subject matter.

In an embodiment of the present disclosure, a circuit breaker assembly for a DC power system is disclosed. The circuit breaker assembly comprises a circuit breaker having at least a pair of round pins forming electrical terminals. The circuit breaker assembly further comprises an insulator. The insulator comprises a base, an intermediate block disposed above the base, and a top block disposed above the intermediate block. The circuit breaker assembly further comprises a first busbar and a second busbar, each attached to an intermediate block via second fasteners inserted into second holes. The circuit breaker assembly further comprises a third busbar attached to a top block via third fasteners inserted into third holes. The first busbar and the second busbar are positioned in alignment with the round pins of the circuit breaker to establish electrical contact therewith. The insulator comprises a pair of pins and laterally extending tabs to guide and retain the first busbar and the second busbar, thereby ensuring stable and secure electrical connections between the circuit breaker and the busbars.

In an aspect of the present disclosure, the circuit breaker assembly enables maintenance of the circuit breaker and the busbars without system shutdown, due to the front-access configuration of the insulator, allowing for quick replacement and servicing of the circuit breaker or busbars.

In another aspect of the present disclosure, the third busbar is configured for connection with an external power source or load, and the first busbar and the second busbar are connected to positive (+ve) and negative (-ve) terminals with the round pins of the circuit breaker, respectively, ensuring proper electrical flow through the circuit breaker assembly.

In another aspect of the present disclosure, the circuit breaker assembly further comprises a snap-fit jacket at the ends of the first busbar and the second busbar that engages with the circuit breaker. The snap-fit jacket is configured to snap securely into place over the busbars, ensuring seamless electrical contact without the need for additional fasteners.

In another aspect of the present disclosure, the busbars and said insulator are configured to maintain optimal thermal dissipation, reducing heat build-up during high-current operation, thus preventing overheating and enhancing the operational lifespan of the circuit breaker.

In another embodiment of the present disclosure, the insulator for a circuit breaker is disclosed. The insulator comprises a base configured to provide a foundation for securing said insulator. The base comprises a pair of first holes for receiving first fasteners to attach the base to an external surface. The base further comprises a pair of pins extending vertically from the base to engage with a first busbar and a second busbar to prevent misalignment during installation. The base further comprises an intermediate block positioned above the base. The intermediate block comprises second holes positioned on opposite sides for receiving second fasteners to secure the first busbar and second busbar. The intermediate block further comprises tabs extending laterally to prevent angular displacement of the busbars during operation. The intermediate block further comprises a top block configured above the intermediate block. The top block comprises third holes for securing a third busbar via third fasteners, ensuring a stable connection. The said insulator is configured to facilitate front access installation of the circuit breaker, eliminating the need for rear access and minimizing the risk of busbar misalignment, thus enhancing system reliability and ease of maintenance.

In another aspect of the present disclosure, the pins are dimensioned to extend beyond the height of the insulator to guide the first busbar and second busbar into proper alignment during installation, preventing any angular displacement or rotational misalignment of the busbars.

In another aspect of the present disclosure, the base intermediate block and the top block are constructed from a high-strength, dielectric material capable of withstanding high temperatures, mechanical stress, and electrical arcing, thereby enhancing the safety and durability of the circuit breaker assembly.

In another embodiment of the present disclosure, method for installing a circuit breaker using an insulator is disclosed. The method comprises securing the insulator to a mounting surface using first fasteners inserted into first holes. The method further comprises attaching first busbar and second busbar to intermediate block using second fasteners inserted into second holes. The pins guide the busbars into place. The method further comprises securing the third busbar to the top block using third fasteners inserted into third holes. The method further comprises snap-fitting the jackets over the busbars to ensure the secure electrical connection with the circuit breaker. The method further comprises installing the circuit breaker via front-access, eliminating the need for rear access, and ensuring precise alignment of the busbars during installation.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The accompanying drawings constitute a part of the description and are used to provide further understanding of the present disclosure. The drawings illustrate exemplary embodiments of the present disclosure and, together with the description, serve to explain the principles of the present disclosure.
**Figure 1** illustrates a front view of a circuit breaker assembly depicting connection between a circuit and an insulator of the present disclosure.
**Figure 2** illustrates an isometric view of the insulator of **Figure 1****.**
**Figure 3** illustrate a flowchart of a method for insulating the circuit breaker using the insulator.

A more complete understanding of the present disclosure and its embodiments thereof may be acquired by referring to the following description and the accompanying drawings.

### DETAILED DESCRIPTION

Exemplary embodiments now will be described with reference to the accompanying drawings. The disclosure may, however, be embodied in many different forms and should not be construed as limited to the embodiments set forth herein; rather, these embodiments are provided so that this disclosure will be thorough and complete, and will fully convey its scope to those skilled in the art. The terminology used in the detailed description of the particular exemplary embodiments illustrated in the accompanying drawings is not intended to be limiting. In the drawings, like numbers refer to like elements.

It is to be noted, however, that the reference numerals used herein illustrate only typical embodiments of the present subject matter, and are therefore, not to be considered for limiting its scope, for the subject matter may admit to other equally effective embodiments.

The specification may refer to "an", "another", "one" or "some" embodiment(s) in several locations.

This does not necessarily imply that each such reference is to the same embodiment(s), or that the feature only applies to a single embodiment. Single features of different embodiments may also be combined to provide other embodiments.

The terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps or acts are in some way inherently mutually exclusive.

As used herein, the singular forms "a", "an" and "the" are intended to include the plural forms as well, unless expressly stated otherwise. It will be further understood that the terms "include", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include operatively connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skills in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The detailed description includes specific details for the purpose of providing a thorough understanding of the present disclosure. However, it will be apparent to those skilled in the art that the present disclosure may be practiced without these specific details.

The present disclosure relates to an insulator for a circuit breaker that enables secure, front-access installation and maintenance of multiple busbars without requiring rear access. The insulator is defined by a modular structure comprising a base, an intermediate block, and a top block arranged in a stepped configuration to facilitate organized and compact electrical connectivity. The base includes vertically extending pins that align and stabilize the first and second busbars during installation, while laterally extending tabs on the intermediate block prevent angular displacement and slippage of the busbars during operation. The top block supports an additional busbar through designated fastening points. By enabling precise alignment, stable fastening, and thermal-vibration resistance through its integrated features, the disclosure addresses key limitations of existing insulator designs such as misalignment risks, extended servicing time, and tolerance issues thereby improving installation efficiency, enhancing electrical safety, and ensuring reliable long-term performance of the circuit breaker.

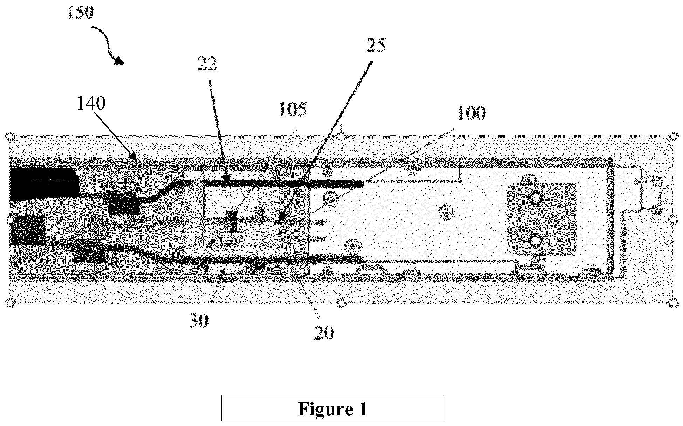

**Figure 1** illustrates a front view of a circuit breaker assembly **150** depicting connection between a circuit breaker **140** and an insulator **100** of the present disclosure. The circuit breaker assembly **150** is configured for use in a Direct current (DC) power system and facilitates front-access electrical connections between the circuit breaker **140** and a plurality of busbars. The circuit breaker assembly **150** may include a circuit breaker **140** configured with at least a pair of round pins **30** that serve as electrical terminals. The circuit breaker **140** is a molded case type specifically designed for DC power systems and is removably mounted to engage with the underlying busbar arrangement. The round pins **30** of the circuit breaker **140** extend downward and are configured to mate with corresponding contact points on the plurality of busbars. The plug-in type connection enabled by these round pins **30** allows for front-accessible electrical interfacing between the circuit breaker **140** and the busbars, eliminating the need for rear wiring. This configuration simplifies installation and maintenance, and ensures secure and stable connectivity.

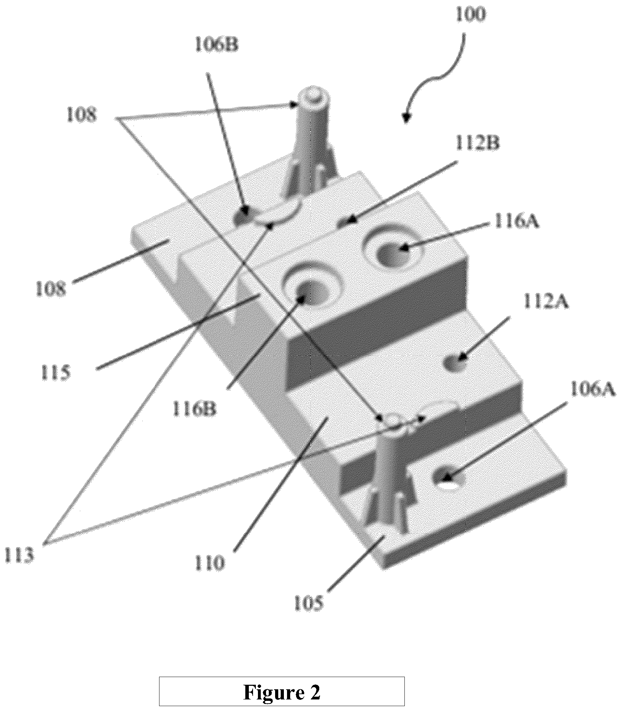

As shown in **Figure 1****,** the circuit breaker assembly **150** may further include an insulator **100.** The insulator **100** includes a base **105** onto which various busbars and fasteners are mounted. The base **105** is constructed from a dielectric material capable of withstanding high temperatures and mechanical stress, and is configured to be secured onto an external mounting surface. The base **105** further accommodates a first busbar **20** and a second busbar **22,** both extending longitudinally across the base **105** and configured for connection to the positive and negative terminals of the circuit breaker **140,** respectively. These busbars **20, 22** are typically formed from conductive metals such as copper or aluminum and may be plated to enhance conductivity and corrosion resistance. Each of these busbars **20, 22** is aligned and secured to an intermediate block **110** (shown in **Figure 2**) by means of second fasteners inserted through second holes **112A, 112B,** thereby providing a stable electrical interface. The second holes **112A, 112B** are dimensioned and positioned to accommodate precision mounting and eliminate misalignment during field installation.

Further, a third busbar **25** is mounted above plane of the first and second busbars **20, 22** and is supported by a top block **115,** which is integrally or modularly joined with the base **105.** The third busbar **25** is secured in place using third fasteners inserted through corresponding third holes **116A, 116B** provided in the top block **115.** The third busbar **25** is configured for connection with an external power source or load. The vertical offset between the third busbar **25** and the lower busbars **20, 22** provides necessary electrical clearance and prevents arcing or unintended bridging between conductors during normal operation or under fault conditions.

Further, the round pins **30** are extended from the circuit breaker **140,** which interface directly with the first and second busbars **20, 22.** The round pins **30** provide plug-in style connectivity, facilitating seamless electrical contact when the circuit breaker **140** is inserted in position. The first busbar **20** and second busbar **22** are connected to the positive (+ve) and negative (-ve) terminals with the round pins **30** of the circuit breaker **140,** respectively, ensuring proper electrical flow through the circuit breaker assembly **150.** This plug-in configuration, enabled by the front-access design of the insulator **100,** eliminates the need for rear access during installation or servicing, thereby reducing overall downtime and improving safety.

The busbars **20, 22** are further guided and secured in place by structural features of the insulator **100,** including pins **108** and tabs **113** (shown in **Figure 2**). The pins **108** are vertically extending alignment elements that engage with the lower busbars **20, 22** during assembly, ensuring they remain properly positioned and free from rotational misalignment. The tabs **113,** provided on the intermediate block, extend laterally to restrict angular displacement and secure the busbars **20, 22** against mechanical vibration or thermal expansion forces.

The circuit breaker assembly **150** allows for modular replacement and maintenance of the circuit breaker **140** or any of the busbars **20, 22, 25** without requiring shutdown of the entire system. This is made possible through the front-access configuration and guided alignment mechanism offered by the insulator **100.** The snap-fit jackets (not visible in this figure but referenced in the disclosure) further simplify the attachment of the first and second busbars **20, 22** to the circuit breaker **140,** eliminating the need for additional fasteners and ensuring reliable electrical engagement under varying load conditions.

**Figure 2** illustrates an isometric view of the insulator **100** of **Figre 1.** The insulator includes the base **105.** The base **105** forms the lowermost portion of the insulator **100** and serves as the foundational structure for mechanically securing the insulator **100** to an external mounting surface, such as a bottom plate of a solar add-on and expansion unit. To this end, the base **105** is integrally formed with a pair of first holes **106A, 106B,** positioned on opposite operative sides thereof. Each of the first holes **106A, 106B** is configured as a through-hole for receiving respective first fasteners (not shown in the figure) that enable the attachment of the base **105** to the external mounting surface. This bottom anchoring enhances stability under operational stress.

In addition to the fastening function, the base **105** is also configured with the pair of pins **108,** vertically extending from its top surface. Each pin **108** is strategically located in close proximity to a respective first hole **106A, 106B** to align structurally with the intermediate block **110** above. These pins **108** serve a critical alignment and anti-rotation function during installation of the first and second busbars **20, 22,** Notably, the pins **108** are dimensioned to extend beyond the overall assembled height of the insulator **100,** such that they act as vertical guides for the first busbar **20** and second busbar **22,** ensuring accurate placement and preventing angular or rotational misalignment. This structural feature enhances installation precision and improves the long-term mechanical reliability of the busbar-insulator interface, particularly under conditions of thermal cycling and mechanical vibration.

Positioned directly above the base **105** is the intermediate block **110,** which is mechanically stacked and fitted in stepped alignment with the base **105.** The intermediate block **110** is configured with a pair of second holes **112A, 112B,** located on either lateral side, corresponding in position to the first holes **106A, 106B** of the base **105.** These second holes **112A, 112B** are through-holes adapted to receive second fasteners (not shown in the figure), which are inserted from the rear side of the insulator **100** to securely fix the first busbar **20** and second busbar **22** to the intermediate block **110.** This rear-side mounting allows stable anchoring of the busbars **20, 22** while preserving front-end access for installation and service.

Further, the intermediate block **110** is integrally provided with a pair of tabs **113,** laterally extending from opposite operative edges. These tabs **113** are strategically positioned to engage with and interlock the busbars **20, 22** preventing slippage or angular displacement of the busbars **20, 22** during operation. This anti-slip and locking mechanism ensure that the busbars **20, 22** remain stably positioned even under external forces such as vibrations, mechanical shocks, or thermal expansion. The cooperative action of the tabs **113** and the pins **108** significantly mitigates any possibility of busbar misalignment, thereby ensuring a high-reliability electrical and mechanical interface.

Stacked above the intermediate block **110** is the top block **115,** which completes the stepped, vertically layered structure of the insulator **100.** The top block **115** includes a pair of third holes **116A, 116B** configured for mounting the third busbar **25.** Each third hole is constructed as a counterbored hole to accommodate third fasteners (not shown in the figure), allowing secure attachment of the third busbar **25** while also facilitating a flush fit of the fasteners, thus enhancing safety and structural compactness. The counterbored design ensures that the fastening heads do not protrude, thereby reducing the risk of accidental contact or interference with surrounding components.

In an implementation, the insulator **100** is designed to facilitate front-accessible installation and servicing of the associated busbars **20, 22, 25** and the circuit breaker **140,** eliminating the need for rear access. This is particularly advantageous in compact or enclosed installations, such as solar panel junction boxes, where rear accessibility is often restricted. The insulator **100** enables simplified and tool-friendly front-end mounting, thereby reducing installation and maintenance time, and minimizing errors such as misalignment or improper tightening of the busbars **20, 22, 25.**

Moreover, the material construction of the base **105,** the intermediate block **110,** and the top block **115** is preferably a high-strength, dielectric material capable of withstanding high electrical, thermal, and mechanical stresses. This ensures reliable insulation, thermal resistance, and safety during fault conditions or prolonged high-current operation. The modular, layered design also allows ease of manufacturing, scalable customization, and efficient heat dissipation.

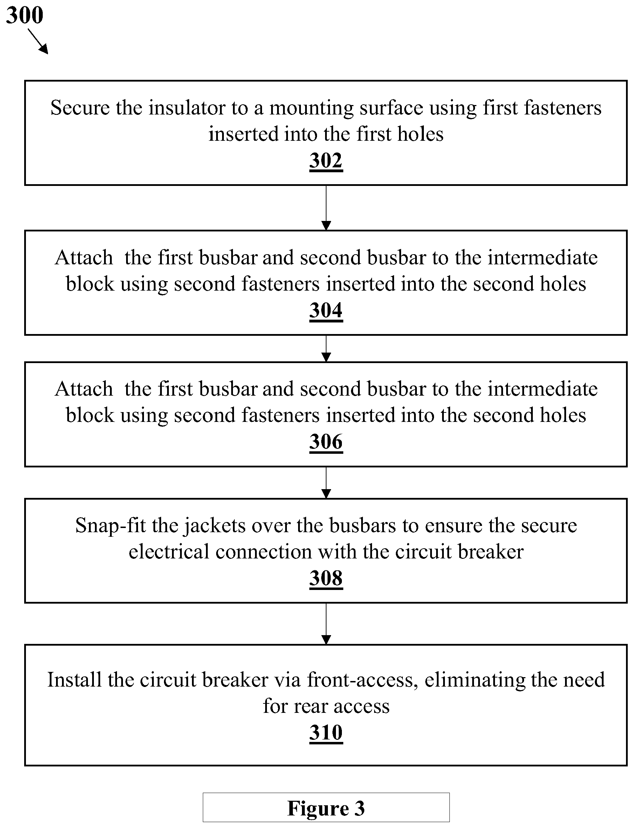

**Figure 3** illustrate a flowchart of a method **300** for insulating the circuit breaker **140** using the insulator **100.** In this regard, each block may represent a module, segment, or portion of code, which comprises one or more executable instructions for implementing the specified logical function(s). It should also be noted that in some alternative implementations, the functions noted in the blocks may occur out of the order noted in the drawings. For example, two blocks shown in succession in **Figure 3** may in fact be executed substantially concurrently or the blocks may sometimes be executed in the reverse order, depending upon the functionality involved. Any process descriptions or blocks in flow charts should be understood as representing modules, segments, or portions of code which include one or more executable instructions for implementing specific logical functions or steps in the process, and alternate implementations are included within the scope of the example embodiments in which functions may be executed out of order from that shown or discussed, including substantially concurrently or in reverse order, depending on the functionality involved. In addition, the process descriptions or blocks in flow charts should be understood as representing decisions made by a hardware structure such as a state machine.

At step **302,** the insulator is secured to a mounting surface using first fasteners that are inserted into corresponding first holes provided in the base of the insulator. This mounting establishes a fixed structural foundation for subsequent electrical and mechanical assembly. The fasteners ensure that the insulator remains immobile under operational stresses, thermal expansion, or vibration. This step defines the starting point of the installation process and guarantees proper spatial orientation of the insulator in the electrical cabinet or enclosure.

At step **304,** the first and second busbars are attached to the intermediate block of the insulator using second fasteners, which are inserted through pre-formed second holes. The intermediate block serves as a central anchoring platform for horizontal busbar installation. During this step, alignment pins projecting from the base engage with cutouts or slots in the busbars to guide them into the correct position. This guided alignment mechanism not only simplifies the assembly process but also ensures electrical contact accuracy and reduces the risk of misalignment-related failure.

At step **306,** the third busbar is secured to the top block of the insulator using third fasteners that pass through designated third holes in the top block. The top block is structurally integrated with the base and intermediate sections, forming a three-tiered insulating structure. This step completes the mechanical assembly of the busbars within the insulator. The vertical stacking of the three busbars offers a compact and reliable configuration that supports efficient power distribution to or from the circuit breaker.

At step **308,** insulating jackets are snap-fitted over the first and second busbars. These jackets are precision-molded to match the profile of the busbars and are configured to snap securely into place without requiring additional tools or adhesives. The snap-fit design facilitates quick installation while providing electrical insulation, touch protection, and improved dielectric isolation. Additionally, the jackets help maintain stable engagement with the circuit breaker terminals during connection.

At step **310,** the insulator structure enables complete front-access installation of the circuit breaker. The spatial arrangement and alignment features of the busbars ensure that the circuit breaker terminals engage precisely without the need for rear access. This design significantly simplifies the installation process, reduces installation time, and improves serviceability, particularly in applications where rear access is limited or unavailable. The guided alignment system also mitigates the risk of terminal mismatch or mechanical stress on the connections.

### Technical Advancement and Economic Significance

The insulator for a circuit breaker disclosed in the present disclosure may have the following advantages:
- Front-access design allows easy installation, servicing, and replacement of the circuit breaker and busbars without system shutdown.
- Snap-fit jacket configuration ensures tool-less, secure electrical connection between the circuit breaker terminals and busbars.
- Guided alignment using pins and tabs prevents misalignment, vibration, and displacement of busbars, enhancing structural integrity.
- Dedicated busbar-to-terminal configuration ensures safe, direct, and stable electrical connections for positive, negative, and load paths
- Optimized thermal dissipation via busbar and insulator configuration minimizes heat buildup, increasing reliability under high current.
- Compact and modular layout supports easy integration into DC power systems and enables modular expansion or replacement.

Although implementations of an insulator for a circuit breaker have been described in language specific to structural features and/or methods, it is to be understood that the appended claims are not necessarily limited to the specific features or methods described. Rather, the specific features and methods are disclosed as examples of implementations of an insulator for a circuit breaker.

The invention has been described above with reference to numerous embodiments and specific examples. Many variations will suggest themselves to those skilled in this art in light of the above detailed description. All such obvious variations are within the full intended scope of the appended claims.

## Claims

1. A circuit breaker assembly (150) for a DC power system, comprising:
a circuit breaker (140) having at least a pair of round pins (30) forming electrical terminals;
an insulator (100) comprising:
a base (105), an intermediate block (110) disposed above the base (105), and a top block (115) disposed above the intermediate block (110);
a first busbar (20) and a second busbar (22), each attached to the intermediate block (110) via second fasteners inserted into second holes (112A, 112B); and
a third busbar (25) attached to the top block (115) via third fasteners inserted into third holes (116A, 116B);
wherein the first busbar (20 and the second busbar (22) are positioned in alignment with the pair of round pins (30) of the circuit breaker (140) to establish electrical contact therewith, and
wherein the insulator (100) comprises a pair of pins (108) and laterally extending tabs (113) to guide and retain the first busbar (20) and the second busbar (22), thereby ensuring stable and secure electrical connections between the circuit breaker (140) and the busbars (20, 22, 25).

2. The circuit breaker assembly as claimed in claim 1, wherein the circuit breaker assembly enables maintenance of the circuit breaker (140) and busbars (20, 22, 25) without system shutdown, due to the front-access configuration of the insulator (100), allowing for quick replacement and servicing of the circuit breaker (140) or busbars (20, 22, 25).

3. The circuit breaker assembly as claimed in claim 1 or 2, wherein the third busbar (25) is configured for connection with an external power source or load, and the first busbar (20) and the second busbar (22) are connected to positive (+ve) and negative (-ve) terminals with the round pins (30) of the circuit breaker (140), respectively, ensuring proper electrical flow through the circuit breaker assembly.

4. The circuit breaker assembly as claimed in any preceding claim, further comprising a snap-fit jacket at the ends of the first busbar (20) and the second busbar (22) that engages with the circuit breaker (140), wherein the jacket is configured to snap securely into place over the busbars (20, 22) ensuring seamless electrical contact without the need for additional fasteners.

5. The circuit breaker assembly as claimed in any preceding claim, wherein the busbars (20, (22, 25) and said insulator (100) are configured to maintain optimal thermal dissipation, reducing heat build-up during high-current operation, thus preventing overheating and enhancing the operational lifespan of the circuit breaker.

6. An insulator (100) for a circuit breaker (140) having round electrical terminals (30), the insulator (100) comprising:
a base (105) configured to provide a foundation for securing said insulator (100), comprising:
a pair of first holes (106A, 106B) for receiving first fasteners to attach the base (105) to an external surface;
a pair of pins (108) extending vertically from the base (105) to engage with a first busbar (20) and a second busbar (22) to prevent misalignment during installation;
an intermediate block (110) positioned above the base (105), comprising:
second holes (112A, 112B) positioned on opposite sides for receiving second fasteners to secure the first busbar (20) and the second busbar (22);
tabs (113) extending laterally to prevent angular displacement of the busbars (20, 22) during operation;
a top block (115) configured above the intermediate block (110), comprising:
a pair of third holes (116A, 116B) for securing a third busbar (25) via third fasteners, ensuring a stable connection; and
wherein said insulator (100) is configured to facilitate front access installation of the circuit breaker (140), eliminating the need for rear access and minimizing the risk of busbar misalignment, thus enhancing system reliability and ease of maintenance.

7. The insulator (100) as claimed in claim 6, wherein the pins (108) are dimensioned to extend beyond the height of the insulator (100) to guide the first busbar (20) and second busbar (22) into proper alignment during installation, preventing any angular displacement or rotational misalignment of the busbars (20, 22).

8. The insulator (100) as claimed in claim 6 or 7, wherein the tabs (113) on the intermediate block (110) are configured to interlock with the busbars (20, 22) during operation, thereby preventing any slippage or displacement due to thermal expansion, vibrations, or external forces.

9. The insulator (100) as claimed in claim 6, 7 or 8, wherein the base (105), intermediate block (110), and top block (115) are constructed from a high-strength, dielectric material capable of withstanding high temperatures, mechanical stress, and electrical arcing, thereby enhancing the safety and durability of the circuit breaker assembly.

10. A method (200) for installing a circuit breaker (140) using an insulator (100), comprising:
securing the insulator (100) to a mounting surface using first fasteners inserted into the first holes (106A, 106B);
attaching the first busbar (20) and the second busbar (22) to the intermediate block (110) using second fasteners inserted into the second holes (112A, 112B), wherein the pins (108) guide the busbars into place;
securing the third busbar (25) to the top block (115) using third fasteners inserted into the third holes (116A, 116B);
snap-fitting the jackets over the busbars (20, 22) to ensure the secure electrical connection with the circuit breaker; and
installing the circuit breaker (140) via front-access, eliminating the need for rear access, wherein the insulator (100) maintains alignment of the busbars (20, 22, 25) during installation.
